# EUROPÄISCHE PATENTANMELDUNG

(11) **EP 1 422 041 A1**
(43) Veröffentlichungstag der Anmeldung: **26.05.2004**
(21) Anmeldenummer: 03024672.2
(22) Anmeldetag: 28.10.2003
(51) Int. Cl.: B29C 45/17, B29C 33/00

(54) **Gasunterstütztes Spritzgiessverfahren zur Herstellung von Kunststoffbauteilen in einem Merfachwerkzeug**

(30) Priorität: 19.11.2002 DE 10253731
(71) Anmelder: REUM GmbH & Co. Betriebs KG, 74736 Hardheim (DE)
(72) Erfinder: Stang, Rolf, 74722 Buchen (DE); Jug, Stefan, 74722 Buchen (DE)
(74) Vertreter: Maser, Jochen, Dipl.-Ing.

(57) **Zusammenfassung**

Ein Verfahren zum Herstellen von Kunststoffbauteilen (40.1) in einem Mehrfachwerkzeug (10) mit zumindest n Kavitäten (12.1,12.2,12.3), wobei n eine natürliche Zahl größer gleich zwei ist, bei dem eine Kunststoffschmelze über n Kunststoffzuführungsleitungen (24.1,24.2,24.3) in die n Kavitäten (12.1,12.2,12.3) gespritzt wird, und anschließend in die eingespritzte Kunststoffschmelze in die n Kavitäten (12.1,12.2,12.3) jeweils über n Gaszuführungsleitungen (18.1,18.2,18.3) ein Gas eingeleitet wird, so dass sich jeweils ein Hohlraum (42.1) innerhalb des Kunststoffbauteils (40.1) bildet, mit anschließendem Aushärten und Entnehmen der Kunststoffbauteile (40.1), ist. In einem ersten Verfahrensschritt nach dem Einspritzten der Kunststoffschmelze in die n Kavitäten (12.1,12.2,12.3) wird über eine erste Gaszuführungsleitung (18.1) Gas in die Kunststoffschmelze einer ersten Kavität (12.1) eingeleitet, wobei die übrigen Gaszuführungsleitungen (18.2,18.3) gesperrt sind und alle Kunststoffzuführungsleitungen (14.1) offen sind. In einem weiteren Verfahrensschritt wird eine weitere Gaszuführungsleitung (18.2) geöffnet und Gas in die Kunststoffschmelze einer weiteren Kavität (12.2) eingeleitet, wobei die Kunststoffzuleitung (24.1) derjenigen Kavität (12.1) geschlossen wird, in der sich im vorangegangenen Verfahrensschritt bereits einen Hohlraum (40.1) ausgebildet hat, gegebenenfalls n minus zwei-faches wiederholen des weiteren Verfahrensschritt, wobei jeweils die weitere Gaszuführungsleitung (18.3) geöffnet wird und die Kunststoffzuleitungen (24.1,24.2) derjenigen Kavitäten (12.1,12.2) gesperrt werden, in denen sich bereits in den voran gegangenen Verfahrensschritten Hohlräume (42.1) gebildet haben.

## Beschreibung

### TECHNISCHES GEBIET

Die vorliegende Erfindung betrifft ein Verfahren zur Herstellung von Kunststoffbauteilen in einem Mehrfachwerkzeug mit zumindest n Kavitäten, wobei n eine natürliche Zahl größer gleich zwei ist, bei dem eine Kunststoffschmelze über n Kunststoffzuführungsleitungen in die n Kavitäten gespritzt wird, und anschließend in die eingespritzte Kunststoffschmelze in den n Kavitäten jeweils über n Gaszuführungsleitungen ein Gas eingeleitet wird, so dass sich jeweils ein Hohlraum innerhalb des Kunststoffbauteils bildet, mit anschließendem Aushärten und Entnehmen der Kunststoffbauteile.

Die vorliegende Erfindung betrifft weiterhin ein Mehrfachwerkzeug zur Herstellung von Kunststoffbauteilen in einem Mehrfachwerkzeug mit zumindest n Kavitäten, wobei n eine natürliche Zahl größer gleich zwei ist, bei dem eine Kunststoffschmelze über n Kunststoffzuführungsleitungen in die n Kavitäten gespritzt wird, und anschließend in die eingespritzte Kunststoffschmelze in den n Kavitäten jeweils über n Gaszuführungsleitungen ein Gas eingeleitet wird, so dass sich jeweils ein Hohlraum innerhalb des Kunststoffbauteils bildet, mit anschließendem Aushärten und Entnehmen der Kunststoffbauteile.

### STAND DER TECHNIK

Es sind Mehrfachwerkzeuge bekannt, bei denen die Kunststoffbauteile nach dem sogenannten Gas-Innendruck-Verfahren hergestellt werden. Dabei wird zunächst Kunststoffschmelze in die Kavitäten des Mehrfachwerkzeuges eingespritzt. Daran anschließend wird über Gaszuführungsleitungen Gas in das Innere der in die Kavitäten eingespritzten Kunststoffschmelze eingeleitet, so dass sich ein Hohlraum innerhalb des herzustellenden Kunststoffbauteils bildet. Bei dem bekannten Mehrfachwerkzeugen kann es, da alle Kavitäten gleichzeitig mit Druckgas beaufschlagt werden aufgrund unterschiedlicher geometrischer Zuleitungsführungen zur unterschiedlicher Ausbildung der Hohlräume kommen.

### DARSTELLUNG DER ERFINDUNG

Ausgehend von dem genannten Stand der Technik liegt der vorliegenden Erfindung die Aufgabe beziehungsweise das technische Problem zugrunde ein Verfahren zur Herstellung von Kunststoffbauteilen und ein Mehrfachwerkzeug zur Herstellung von Kunststoffbauteilen anzugeben, das gewährleistet, dass sich bei jedem hergestellten Kunststoffbauteil ein Hohlraum mit praktisch gleicher Geometrie jeweils ausbildet.

Das erfindungsgemäße Verfahren ist durch die Merkmale des unabhängigen Anspruchs 1 beziehungsweise des unabhängigen Anspruchs 4 gegeben. Vorteilhafte Ausgestaltungen und Weiterbildungen sind Gegenstand der abhängigen Ansprüche.

Das erfindungsgemäße Verfahren zeichnet sich demgemäß dadurch aus, dass in einem ersten Verfahrensschritt nach dem Einspritzen der Kunststoffschmelze in die n Kavitäten über eine erste Gaszuführungsleitung Gas in die Kunststoffschmelze einer ersten Kavität eingeleitet wird, wobei die übrigen Gaszuführungsleitungen gesperrt sind und alle Kunststoffzuführungsleitungen offen sind, in einem weiteren Verfahrensschritt eine weitere Gaszuführungsleitung geöffnet wird und Gas in die Kunststoffschmelze einer weiteren Kavität eingeleitet wird, wobei die Kunststoffzuleitung derjenigen Kavität geschlossen wird, in der sich im vorangegangenen Verfahrensschritt bereits einen Hohlraum ausgebildet hat, gegebenenfalls n minus zwei-faches wiederholen des weiteren Verfahrensschritts, wobei jeweils die weitere Gaszuführungsleitung geöffnet wird und die Kunststoffzuleitungen derjenigen Kavitäten gesperrt werden, in denen sich bereits in den vorangegangenen Verfahrensschritten Hohlräume gebildet haben.

Eine vorteilhafte Ausgestaltung zeichnet sich dadurch aus, dass in jedem weiteren Verfahrensschritt auch die Gaszuführungsleitung derjenigen Kavität/en gesperrt wird/werden, in der/denen sich bereits jeweils ein Hohlraum gebildet hat.

Eine in der Praxis besonders erprobte Ausgestaltung hinsichtlich vorteilhafter Art und Weise zeichnet sich dadurch aus, dass die Kunststoffzuführungsleitung derjenigen Kavität, in die jeweils Gas eingeleitet wird, offen ist, so dass Kunststoffschmelze beim Einleiten des Gases aus der Kavität zurückgedrückt werden kann.

Eine alternative Ausgestaltung eines erfindungsgemäßen Verfahrens zur Herstellung von Kunststoffbauteilen der eingangs genannten Art zeichnet sich dadurch aus, dass in einem ersten Verfahrensschritt eine Gaszuführungsleitung einer Kavität und die zugehörige Kunststoffzuführungsleitung offen ist, während das Gas in die Kunststoffschmelze der Kavität eingeleitet wird, und sämtliche übrigen Gaszuführungsleitungen und Kunststoffzuführungsleitungen gesperrt sind, und der erste Verfahrensschritt bei weiteren n minus eins Kavitäten durchgeführt wird. Dadurch, das jede Kavität einzeln mit dem Druckgas beaufschlagt wird, bilden sich jeweils Hohlräume bei den hergestellten Kunststoffbauteilen, die praktisch die selbe Geometrie aufweisen, wodurch eine gleichbleibende Qualität der Kunststoffbauteile gewährleistet werden kann.

Das erfindungsgemäße Mehrfachwerkzeug zur Herstellung von Kunststoffbauteilen zeichnet sich dadurch aus, dass es mit dem oben beschriebenen Verfahren betrieben wird, das heißt insbesondere eine Steuereinrichtung vorhanden ist, die die Gaszuführungsleitungen beziehungsweise Kunststoffzuführungsleitungen entsprechend ansteuert.

Weitere Ausführungsformen und Vorteile der Erfindung ergeben sich durch die in den Ansprüchen ferner aufgeführten Merkmale sowie durch das nachstehend angegebene Ausführungsbeispiel. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand des in der Zeichnung dargestellten Beispiels näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: stark schematisierte Darstellung eines Mehrfachwerkzeuges zur Herstellung von Kunststoffbauteilen nach dem Gas-Innendruck-Verfahren mit insgesamt drei Kavitäten in einem ersten Verfahrensschritt,
- Fig. 2: stark schematisierte Darstellung des Werkzeuges gemäß Fig. 1 in einem zweiten Verfahrensschritt,
- Fig. 3: stark schematisierte Darstellung des Werkzeuges gemäß Fig. 2 in einem dritten Verfahrensschritt und
- Fig. 4: stark schematisierte Darstellung des Werkzeuges gemäß Fig. 1 unter Einsatz eines Verfahrens nach dem Stand der Technik.

### WEGE ZUM AUSFÜHREN DER ERFINDUNG

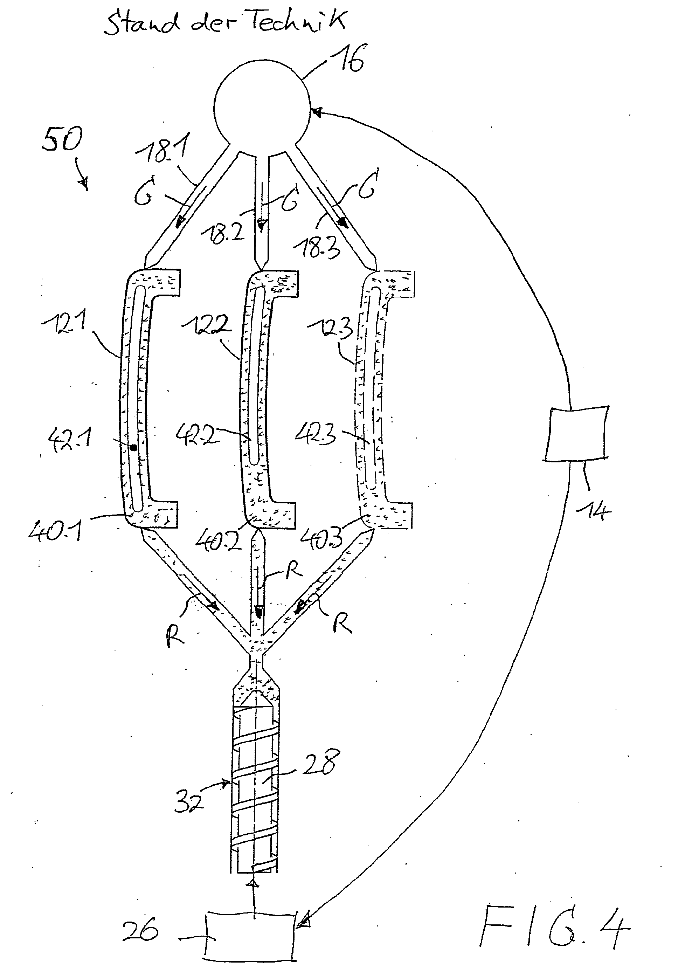

In Fig. 4 ist stark schematisiert ein Mehrfachwerkzeug 50 gemäß dem Stand der Technik dargestellt. Das Werkzeug 50 besitzt insgesamt drei Kavitäten 12.1, 12.2, 12.3, die die Außenkontur des jeweils herzustellenden Kunststoffbauteils 40.1, 40.2, 40.3 abbilden. Im vorliegenden Ausführungsbeispiel besitzen die Kavitäten 12.1, 12.2, 12.3 jeweils eine Umfangskontur eines Griffes.

Zu jeder Kavität 12.1, 12.2, 12.3 führt eine Kunststoffzuführungsleitung 24.1, 24.2, 24.3, die im Bereich einer Injektionsdüse 32 einer Kunststoffeinspritzeinrichtung 26 zusammenlaufen. In Inneren der Injektionsdüse 32 ist eine Förderschnecke 28 vorhanden. Die Kunststoffeinspritzeinrichtung 26 erzeugt eine Kunststoffschmelze, die über die Förderschnecke 28 und die Kunststoffzuführungsleitungen 24.1, 24.2, 24.3 in die jeweilige Kavität 12.1, 12.2, 12.3 gleichzeitig eingespritzt wird.

Bei der Herstellung der Kunststoffbauteile 40.1, 40.2, 40.3 wird das sogenannte Gas-Innendruck-Verfahren eingesetzt. Hierzu sind die einzelnen Kavitäten 12.1, 12.2, 12.3 über die Gaszuführungsleitungen 18.1, 18.2, 18.3 an eine Gasspeichereinheit 16 angeschlossen. Sobald die Kunststoffschmelze in die Kavitäten 12.1, 12.2, 12.3 eingespritzt ist, wird jeweils über die Gaszuführungsleitungen 18.1, 18.2, 18.3 gleichzeitig Gas in das Innere der Kunststoffschmelze der jeweiligen Kavität 12.1, 12.2, 12.3 eingeleitet, so dass sich jeweils im Inneren des Kunststoffbauteils 40.1, 40.2, 40.3 ein Hohlraum 42.1, 42.2, 42.3 ausbildet. Das Einspritzen der Kunststoffschmelze und das Einleiten des Gases wird über eine in Fig. 4 schematisch dargestellte Steuereinrichtung 14 gesteuert. Beim Einleiten des Gases (Pfeile G) bilden sich - wie bereits beschrieben - innerhalb des Kunststoffbauteils 40.1, 40.2, 40.3 Hohlräume 42.1, 42.2, 42.3, wobei gleichzeitig während des Einleiten des Gases die in den Kavitäten 12.1, 12.2, 12.3 vorhandene Kunststoffschmelze teilweise in den Schneckenvorraum 30 der Förderschnecke 28 zurückgedrückt wird (Pfeil R). Dieser Zustand ist in Fig. 4 dargestellt.

Bei der dargestellten Vorgehensweise kann es zu unterschiedlicher Ausbildung der Hohlräume 42.1, 42.2, 42.3 kommen.

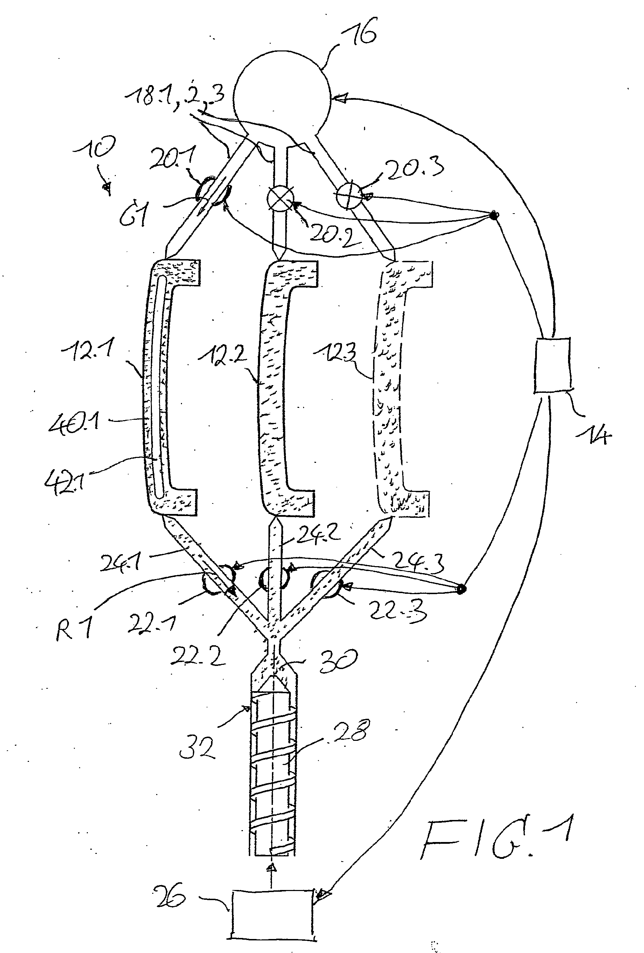

In den Fig. 1 bis 3 ist eine Ausführungsform eines erfindungsgemäßen Mehrfachwerkzeuges 10 dargestellt, bei dem die Herstellung der Kunststoffbauteile 40.1, 40.2, 40.3 in den einzelnen Verfahrensschritte dargestellt ist. Der prinzipielle Aufbau des Mehrfachwerkzeuges 10 ist praktisch gleich wie der Aufbau des Mehrfachwerkzeuges 50 gemäß dem Stand der Technik. Gleiche Bauteile tragen das selbe Bezugszeichen und werden nicht nochmals erläutert.

Das Mehrfachwerkzeug 10 unterscheidet sich von dem Mehrfachwerkzeug 50 dadurch, dass in jeder Gaszuführungsleitung 18.1, 18.2, 18.3 ein Gasabsperrventil 20.1, 20.2, 20.3 und in jeder Kunststoffzuführungsleitung 24.1, 24.2, 24.3 ein Kunststoffabsperrventil 22.1, 22.2, 22.3 vorhanden ist. Die Ventile 20 beziehungsweise 24 werden über die Steuereinrichtung 14 angesteuert. Wie in Fig. 1 dargestellt wird zunächst die Kunststoffschmelze über die Injektionsdüse 32 und die Kunststoffzuführungsleitungen 24.1, 24.2, 24.3 in die jeweilige Kavität 12.1, 12.2, 12.3 eingespritzt.

In dem nächsten Verfahrensschritt wird über die in Fig. 1 links dargestellte Gaszuführungsleitung 18.1 Gas in die in die Kavität 12.1 eingespritzten Kunststoffschmelze eingeleitet (Pfeil G1) . Die Absperrventile 20.2, 20.3 der beiden anderen Gaszuführungsleitungen 18.2, 18.3 sind in diesem Zustand geschlossen. Weiterhin sind sämtliche Kunststoffabsperrventile 22.1, 22.2, 22.3 offen, so dass beim Einleiten des Gases in die linke Kavität 12.1 Kunststoffschmelze über die linke Kunststoffzuführungsleitung 24.1 in den Schneckenvorraum 30 zurückgedrückt werden kann (Pfeil R1).

Somit ist der Hohlraum 20.1 im Kunststoffbauteil 40.1 der Kavität 12.1 hergestellt.

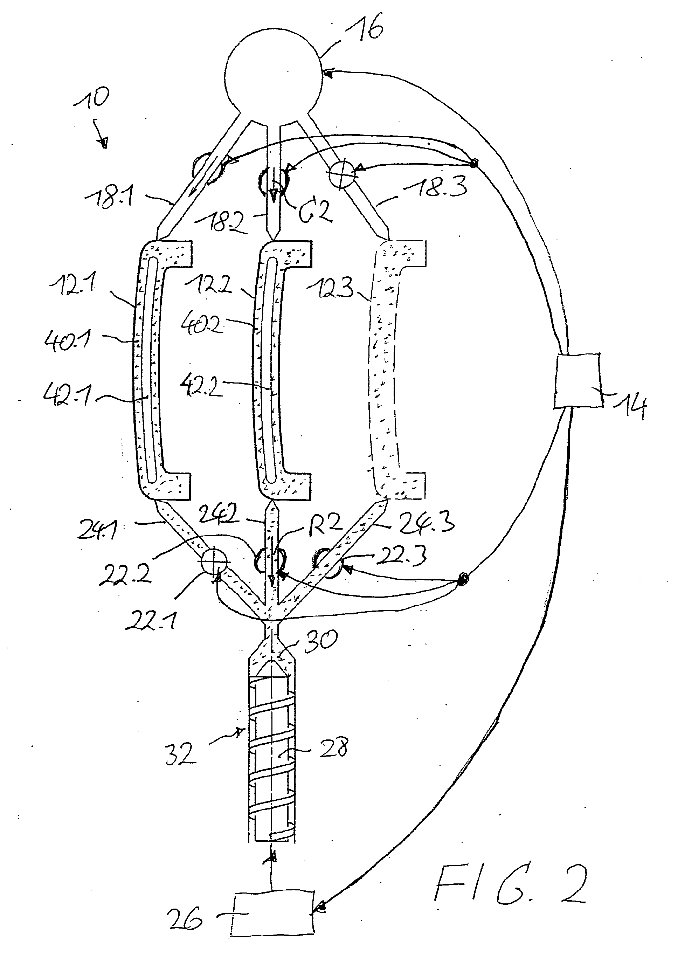

Der nächste Verfahrensschritt ist in Fig. 2 dargestellt. Hierbei wird das Gasabsperrventil 20.2 der mittleren Gaszuführungsleitung 18.2 geöffnet und Gas in das Innere der Kunststoffschmelze der Kavität 12.2 eingeleitet (Pfeil G2). Gleichzeitig ist das Kunststoffabsperrventil 22.1 der linken Kavität 12.1 in Sperrstellung. Das Gasabsperrventil 20.3 der rechten Gaszuführungsleitung 18.3 ist weiterhin geschlossen. Über die offene mittlere Kunststoffzuführungsleitung 24.2 wird beim Einleiten des Gases Schmelze teilweise in den Schneckenvorraum 30 zurückgedrückt (Pfeil R2). Nach diesem Verfahrensschritt ist das Kunststoffbauteil 40.2 in der mittleren Kavität 12.2 mit seinem Hohlraum 42.2 hergestellt.

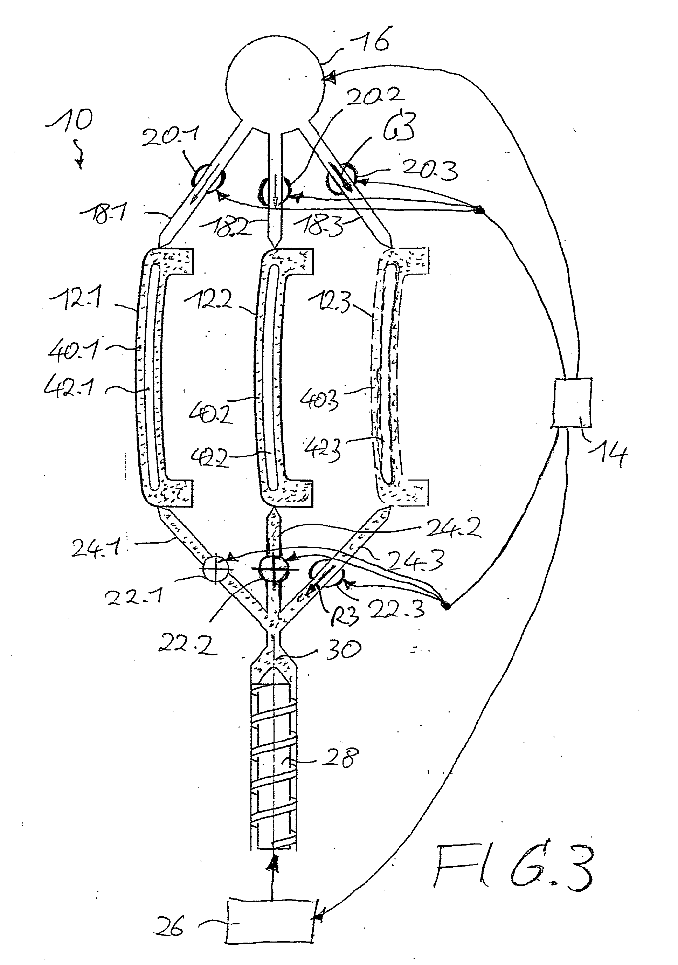

In dem in Fig. 3 dargestellten weiteren Verfahrensschritt wird das Gasabsperrventil 20.3 der rechten Kavität 12.3 geöffnet und gleichzeitig das Kunststoffabsperrventil 22.2 der mittleren Kavität 12.2 geschlossen. Dann wird über die Gaszuführungsleitung 18.3 Gas in die Kunststoffschmelze der Kavität 12.3 eingeleitet (Pfeil G3). Auch hier kann die in der Kavität befindliche Kunststoffschmelze teilweise beim Einleiten des Gases über die offene Kunststoffzuführungsleitung 24.3 in den Schneckenvorraum 30 teilweise zurückgedrückt werden.

Der zuletzt beschriebene Verfahrensschritt kann entsprechend der Anzahl der eventuell vorhandener weiterer Kavitäten wiederholt werden (Pfeil R3).

Durch das erfindungsgemäße Verfahren ist gewährleistet, dass sich bei jedem Kunststoffbauteil 40.1, 40.2, 40.3 ein in seiner Geometrie gleicher Innenhohlraum 42.1, 42.2, 42.3 ausbildet.

## Patentansprüche

1. Verfahren zum Herstellen von Kunststoffbauteilen (40.1, 40.2, 40.3) in einem Mehrfachwerkzeug (10) mit zumindest n Kavitäten (12.1, 12.2, 12.3), wobei n eine natürliche Zahl größer gleich zwei ist, bei dem eine Kunststoffschmelze über n Kunststoffzuführungsleitungen (24.1, 24.2, 24.3) in die n Kavitäten (12.1, 12.2, 12.3) gespritzt wird, und anschließend in die eingespritzte Kunststoffschmelze in die n Kavitäten (12.1, 12.2, 12.3) jeweils über n Gaszuführungsleitungen (18.1, 18.2, 18.3) ein Gas eingeleitet wird, so dass sich jeweils ein Hohlraum (42.1, 42.2, 42.3) innerhalb des Kunststoff-, bauteils (40.1, 40.2, 40.3) bildet, mit anschließendem Aushärten und Entnehmen der Kunststoffbauteile (40.1, 40.2, 40.3),
**dadurch gekennzeichnet, dass**
- in einem ersten Verfahrensschritt nach dem Einspritzten der Kunststoffschmelze in die n Kavitäten (12.1, 12.2, 12.3) über eine erste Gaszuführungsleitung (18.1) Gas in die Kunststoffschmelze einer ersten Kavität (12.1) eingeleitet wird, wobei die übrigen Gaszuführungsleitungen (18.2, 18.3) gesperrt sind und alle Kunststoffzuführungsleitungen (14.1, 14.2, 14.3) offen sind,
- in einem weiteren Verfahrensschritt eine weitere Gaszuführungsleitung (18.2) geöffnet wird und Gas in die Kunststoffschmelze einer weiteren Kavität (12.2) eingeleitet wird, wobei die Kunststoffzuleitung (24.1) derjenigen Kavität (12.1) geschlossen wird, in der sich im vorangegangenen Verfahrensschritt bereits einen Hohlraum (40.1) ausgebildet hat,
- gegebenenfalls n minus zwei-faches wiederholen des weiteren Verfahrensschritt, wobei jeweils die weitere Gaszuführungsleitung (18.3) geöffnet wird und die Kunststoffzuleitungen (24.1, 24.2) derjenigen Kavitäten (12.1, 12.2) gesperrt werden, in denen sich bereits in den voran gegangenen Verfahrensschritten Hohlräume (42.1, 42.2) gebildet haben.

2. Verfahren nach Anspruch 1,
**dadurch gekennzeichnet, dass**
- in jedem weiteren Verfahrensschritt auch die Gaszuführungsleitung derjenigen Kavität/en gesperrt wird/werden, in der/denen sich bereits jeweils ein Hohlraum gebildet hat.

3. Verfahren nach Anspruch 1 oder 2,
**dadurch gekennzeichnet, dass**
- die Kunststoffzuführungsleitung derjenigen Kavität, in die jeweils Gas eingeleitet wird, offen ist, so dass Kunststoffschmelze beim Einleiten des Gases aus der Kavität zurückgedrückt werden kann.

4. Verfahren zum Herstellen von Kunststoffbauteilen (40.1, 40.2, 40.3) in einem Mehrfachwerkzeug (10) mit zumindest n Kavitäten (12.1, 12.2, 12.3), wobei n eine natürliche Zahl größer gleich zwei ist, bei dem eine Kunststoffschmelze über n Kunststoffzuführungsleitungen (24.1, 24.2, 24.3) in die n Kavitäten (12.1, 12.2, 12.3) gespritzt wird, und anschließend in die eingespritzte Kunststoffschmelze'in die n Kavitäten (12.1, 12.2, 12.3) jeweils über n Gaszuführungsleitungen (18.1, 18.2, 18.3) ein Gas eingeleitet wird, so dass sich jeweils ein Hohlraum (42.1, 42.2, 42.3) innerhalb des Kunststoffbauteils (40.1, 40.2, 40.3) bildet, mit anschließendem Aushärten und Entnehmen der Kunststoffbauteile (40.1, 40.2, 40.3),
**dadurch gekennzeichnet, dass**
- in einem ersten Verfahrensschritt eine Gaszuführungsleitung einer Kavität und die zugehörige Kunststoffzuführungsleitung offen ist, während das Gas in die Kunststoffschmelze der Kavität eingeleitet wird, und sämtliche übrigen Gaszuführungsleitungen und Kunststoffzuführungsleitungen gesperrt sind, und
- der erste Verfahrensschritt bei weiteren n minus eins Kavitäten durchgeführt wird.

5. Mehrfachwerkzeug (10) zur Herstellung von Kunststoffbauteilen (40.1, 40.2, 40.3) mit Hohlräumen (42.1, 42.2, 42.3) mit
- n Kavitäten (12.1, 12.2, 12.3),
- n Gaszuführungsleitungen (18.1, 18.2, 18.3) mit das Gasabsperrventil (20.1, 20.2, 20.3),
- n Kunststoffzuführungsleitungen (24.1, 24.2, 24.3) mit Kunststoffabsperrventilen (22.1, 22.2, 22.3),
- einer Gasspeichereinheit (16) und einer Kunststoffeinspritzeinrichtung (26),
**dadurch gekennzeichnet, dass**
- eine Steuereinrichtung (14) vorhanden ist, die die Gasabsperrventile (20.1, 20.2, 20.3) und die Kunststoffabsperrventile (22.1, 22.2, 22.3) gemäß dem Verfahrensschritten nach einem oder mehreren der vorstehenden Verfahrensansprüche ansteuert.
